Europäisches Patentamt

**European Patent Office**

**Office européen des brevets**

(19)

(11) Veröffentlichungsnummer: **0 044 577**
**B1**

(12) **EUROPÄISCHE PATENTSCHRIFT**

(45) Veröffentlichungstag der Patentschrift:
08.05.85

(21) Anmeldenummer: 81200612.0

(22) Anmeldetag: 04.06.81

(51) Int. Cl.⁴: **F 16 C 33/12**, F 16 D 69/02,
C 22 C 32/00 .

(54) Verbundgleitlagerwerkstoff.

(30) Priorität: 19.07.80 DE 3027409

(43) Veröffentlichungstag der Anmeldung:
27.01.82 Patentblatt 82/4

(45) Bekanntmachung des Hinweises auf die Patenterteilung:
08.05.85 Patentblatt 85/19

(84) Benannte Vertragsstaaten:
AT DE FR GB IT SE

(56) Entgegenhaltungen:
FR - A - 2 186 352
FR - A - 2 318 191
FR - A - 2 378 203
FR - A - 2 443 926

CHEMICAL ABSTRACTS, Band 82, nr. 16, 21. April 1975,
Seite 267, nr. 101892r, Columbus, Ohio, U.S.A., H.
NAGASAKA: "Electrophoretic deposition of solid
lubricants"
CHEMICAL ABSTRACTS, Band 88, nr. 26, 26. Juni 1978,
Seite 92, nr. 192799d, Columbus, Ohio, U.S.A., G.S.
SENIOR: "Polymeric coatings"
Maschinenmarkt/MM-Industriejournal 77, Heft 6, K24,
"Lager ohne Öl"

(73) Patentinhaber: KOLBENSCHMIDT Aktiengesellschaft,
Christian-Schmidt-Strasse 8/12 Postfach 1351,
D-7107 Neckarsulm (DE)

(72) Erfinder: Bickle, Wolfgang, Friedenstrasse 13,
D-6831 Reilingen (DE)
Erfinder: Funke, Rolf, Dipl.-Ing., Im Kirchbrändel 8,
D-7525 Bad Schönborn II (DE)
Erfinder: Pfoh, Rolf, Dipl.-Ing., Weinbergstrasse 10a,
D-6909 Rauenberg (DE)
Erfinder: Querner, Valentin, Seitenstrasse 9,
D-6956 Siglingen (DE)
Erfinder: Täffner, Hans, Wilhelmstrasse 43,
D-7107 Neckarsulm (DE)

(74) Vertreter: Fischer, Ernst, Dr., Reuterweg 14,
D-6000 Frankfurt am Main 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Verbundgleitlagerwerkstoff, bestehend aus einer Stahlstützschale und einer darauf aufgebrachten Lagermetallschicht aus porös gesinterter Bronze, deren Dicke 250 bis 350 µm beträgt und deren Lückenvolumen von 25 bis 45% mit einer Mischung aus Fluorkohlenwasserstoff mit 20 bis 50 Gew.-% Blei ausgefüllt ist und auf der sich noch eine Gleitschicht der Fluorkohlenwasserstoff-Blei-Mischung befindet.

Ein solcher Verbundgleitlagerwerkstoff ist in der Weise aufgebaut, daß auf einen verkupferten oder auch unverkupferten Stahlrücken eine 250 bis 350 µm dicke Schicht aus kugeligem, knollenförmigem oder spratzigem Zinn-Bronze-Pulver mit einer Körnung von 150 bis 175 µm aufgesintert ist. Das Lückenvolumen der porösen Bronzeschicht, das 25 bis 45% beträgt, ist in einem Walzprozeß vollständig mit einer Mischung aus Polytetrafluoräthylen von z. B. 80 Vol.-% und Bleipulver von z. B. 20 Vol.-% ausgefüllt. Hierauf befindet sich zusätzlich noch eine 10 bis 30 µm dicke Gleitschicht aus der Polytetrafluoräthylen-Blei-Mischung. Diese Mischung ist ausgesintert. Stahlrücken und poröse Bronzeschicht verleihen diesem Verbundgleitlager eine hohe Druckfestigkeit und eine gute Wärmeleitfähigkeit (Maschinenmarkt/MM-Industriejournal 77, Heft 6 vom 19. 01. 71, »Lager ohne Öl«). Bekannt ist auch, bei einem solchen Verbundgleitlagerwerkstoff anstelle von Polytetrafluoräthylen Polyacetal zu verwenden (VDI-Z. 110 (1968) Nr. 15, Seiten 632 bis 636).

Der Nachteil dieser Verbundgleitlagerwerkstoffe besteht darin, daß die Gleitfläche selbst durch Läppen oder Schaben nicht spanend bearbeitet werden darf, da die Gefahr besteht, daß durch die spanende Bearbeitung die für die Funktion des Lagers wichtige Gleitschicht zerstört wird.

Im Hinblick auf die Entwicklungen im modernen Maschinenbau wird nach Gleitlagerelementen gesucht, die den gesteigerten Anforderungen genügen. Unter diesem Gesichtspunkt ergibt sich für die der vorliegenden Erfindung zugrundeliegende Aufgabe, einen Verbundgleitlagerwerkstoff zu entwickeln, dessen mechanisch technologisches Verhalten im Betrieb wenigstens das gleiche wie das von herkömmlichen Verbundgleitlagerwerkstoffen ist und dessen Gleitfläche spanend nachbearbeitet, insbesondere Schmiertaschen bzw. Schmiernuten in der Gleitfläche angebracht werden können.

Die Lösung dieser Aufgabe besteht in einem Verbundgleitlagerwerkstoff des eingangs beschriebenen Aufbaues, bei dem erfindungsgemäß die Fluorkohlenwasserstoff-Blei-Mischung 30 bis 60 Gew.-% Polyvinylidenfluorid enthält und die Gleitschicht 30 bis 500 µm dick ist.

Nach einem weiteren Merkmal der Erfindung kann die Fluorkohlenwasserstoff-Blei-Mischung noch 5 bis 30 Gew.-% Polytetrafluoräthylen enthalten.

Eine vorzugsweise Ausführungsform des Verbundgleitlagerwerkstoffs besteht darin, daß sich die Polyvinylidenfluorid-Polytetrafluoräthylen-Blei-Mischung aus 50 Gew.-% Polyvinylidenfluorid und 40 Gew.-% Blei sowie 10 Gew.-% Polytetrafluoräthylen zusammensetzt.

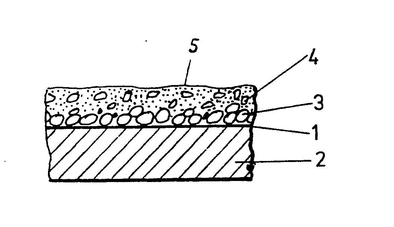

In der Zeichnung ist der Aufbau des erfindungsgemäßen Verbundgleitlagerwerkstoffs dargestellt.

Auf einen mit einer Kupferschicht 1 versehenen Stahlrücken 2 ist eine poröse Schicht aus kugeligem Bronzepulver, bestehend aus 80 Gew.-% Kupfer, 10 Gew.-% Blei und 10 Gew.-% Zinn aufgesintert. Das Lückenvolumen der Bronzeschicht 3 mit einer Porosität von 40% ist in einem Walzprozeß bei einer Temperatur von ca. 240°C vollständig mit einer Mischung 4 aus 50 Gew.-% Polyvinylidenfluorid, 10 Gew.-% Polytetrafluoräthylen und 40 Gew.-% Blei ausgefüllt. Auf dieser Bronzeschicht befindet sich zusätzlich noch eine 0,03 bis 0,5 mm dicke Gleitschicht 5 aus der Polyvinylidenfluorid-Polytetrafluoräthylen-Blei-Mischung.

## Patentansprüche

1. Verbundgleitlagerwerkstoff, bestehend aus einer Stahlstützschale und einer darauf aufgebrachten Lagermetallschicht aus porös gesinterter Bronze, deren Dicke 250 bis 350 µm beträgt und deren Lückenvolumen von 25 bis 45% mit einer Mischung aus Fluorkohlenwasserstoff mit 20 bis 50 Gew.-% Blei ausgefüllt ist und auf der sich noch eine Gleitschicht der Fluorkohlenwasserstoff-Blei-Mischung befindet, dadurch gekennzeichnet, daß die Fluorkohlenwasserstoff-Blei-Mischung 30 bis 60 Gew.-% Polyvinylidenfluorid enthält und die Gleitschicht 30 bis 500 µm dick ist.

2. Verbundgleitlagerwerkstoff nach Anspruch 1, dadurch gekennzeichnet, daß die Fluorkohlenwasserstoff-Blei-Mischung noch 5 bis 30 Gew.-% Polytetrafluoräthylen enthält.

3. Verbundgleitlagerwerkstoff nach den Ansprüchen 1 und 2, dadurch gekennzeichnet, daß die Polyvinylidenfluorid-Polytetrafluoräthylen-Blei-Mischung aus 50 Gew.-% Polyvinylidenfluorid und 40 Gew.-% Blei sowie 10 Gew.-% Polytetrafluoräthylen besteht.

## Claims

1. A composite material for sliding surface bearings, comprising a supporting shell of steel, which is covered by a bearing metal layer consisting of sintered porous bronze, which has a thickness of 250 to 350 microns and a porosity of 25 to 45% and the voids of which are filled with a fluorocarbon-lead mixture containing 20 to 50% by weight led and which ist covered by an antifriction layer consisting of the fluorocarbon-lead mixture characterized in that the fluorocarbon-lead mixture comprises 30 to 60% by weight polyvinylidene fluoride and the antifriction layer has a thickness of 30 to 500 microns.

2. A composite material for sliding surface bearings according to claim 1, characterized in that the fluorocarbon-lead mixture contains also 5 to 30% by weight polytetrafluoroethylene.

3. A composite material for sliding surface bearings according to claims 1 and 2, characterized in that the polyvinylidene fluoride-Polytetrafluoroethylene-lead mixture comprises 50% by weight polyvinylidene fluoride and 40% by weight lead and 10% by weight polytetrafluoroethylene.

## Revendications

1. Matériau composite pour palier lisse, constitué d'une coquille d'appui en acier et, déposée sur celle-ci, d'une couche métallique pour palier en bronze poreux fritté, dont l'épaisseur est comprise entre 250 et 350 microns, et dont le volume des lacunes est rempli pour 25 à 45% d'un mélange d'hydrocarbure fluroré avec 20 à 50% en poids de plomb, et sur laquelle se trouve encore une couche de glissement du mélange d'hydrocarbure fluoré-plomb, caractérisé en ce que le mélange d'hydrocarbure fluoré-plomb contient de 30 à 60% en poids de poly(fluorure de vinylidène) et la couche de glissement a une épaisseur de 30 à 500 microns.

2. Matériau composite pour palier lisse selon la revendication 1, caractérisé en ce que le mélange d'hydrocarbure fluoré-plomb contient, en plus, de 5 à 30% en poids de polytétrafluoroéthylène.

3. Matériau composite pour palier lisse selon les revendications 1 et 2, caractérisé en ce que le mélange poly(fluorure de vinylidène)-polytétrafluoroéthylène-plomb est constitué de 50% en poids de poly(fluorure de vinylidène) et de 40% en poids de plomb, ainsi que de 10% en poids de polytétrafluoroéthylène.